# EUROPÄISCHE PATENTSCHRIFT

(11) **EP 3 480 436 B1**
(45) Veröffentlichungstag und Bekanntmachung des Hinweises auf die Patenterteilung: **17.06.2020**
(21) Anmeldenummer: 18202729.2
(22) Anmeldetag: 26.10.2018
(51) Int. Cl.: F01N 1/16, F01N 11/00, G01F 1/66, G01M 15/10

(54) **VERFAHREN UND VORRICHTUNG ZUR ANALYSE DES AKUSTISCHEN VERHALTENS EINER ABGASKLAPPE**
METHOD AND DEVICE FOR ANALYSING THE ACOUSTICS OF AN EXHAUST GAS FLAP
PROCÉDÉ ET DISPOSITIF D'ANALYSE DU COMPORTEMENT ACOUSTIQUE D'UN CLAPET DE GAZ D'ÉCHAPPEMENT

(30) Priorität: 06.11.2017 DE 102017125801; 08.12.2017 DE 102017129234
(43) Veröffentlichungstag der Anmeldung: 08.05.2019
(73) Patentinhaber: Eberspächer Exhaust Technology GmbH & Co. KG, 66539 Neunkirchen (DE)
(72) Erfinder: Grötzinger, Sven, 72622 Nürtingen (DE)
(74) Vertreter: Ruttensperger Lachnit Trossin Gomoll

(56) Entgegenhaltungen:
- CN-A- 102 175 299
- DE-A1-102006 054 603
- DE-T5-112006 002 343

## Beschreibung

Die vorliegende Erfindung betrifft ein Verfahren und eine Vorrichtung, mit welchen das akustische Verhalten einer Abgasklappe für eine Abgasanlage einer Brennkraftmaschine analysiert werden kann. In Abgasanlagen von Fahrzeugen werden Abgasklappen verbaut, um das akustische Verhalten der Abgasanlage gezielt beeinflussen zu können. Dazu weisen derartige Abgasklappen einen im Allgemeinen rohrartigen Klappenkörper auf, welcher in eine Abgasanlage integriert wird. Im Klappenkörper ist eine Klappenblende zwischen einer Abschließstellung und einer Freigabestellung verschwenkbar getragen. Durch Verschwenkung der Klappenblende kann die akustische Transparenz der Abgasklappe beeinflusst werden.

Bei der Umströmung der Klappenblende insbesondere im geschlossenen Zustand derselben kann es durch konstruktionsbedingt vorhandene Leckagen zu Strömungsgeräuschen kommen, welche im Allgemeinen als Störgeräusche wahrgenommen werden. Derartige Strömungsgeräusche können einerseits grundsätzlich konstruktionsbedingt entstehen, können andererseits aber auch verursacht sein von bei der Fertigung von Abgasklappen auftretenden Fertigungstoleranzen oder/und Montagefehlern.

Um die akustische Qualität von Abgasklappen bewerten zu können, kann beispielsweise derart vorgegangen werden, dass ein mit einer Abgasklappe ausgestattetes Fahrzeug oder eine an eine Brennkraftmaschine angeschlossene Abgasanlage in einem Prüfstand akustisch untersucht werden. Um dabei verschiedene Klappen analysieren zu können, ist es erforderlich, für jede zu untersuchende Abgasklappe die Abgasanlage zu demontieren und wieder zu montieren, was einerseits zeitaufwendig ist, andererseits die Gefahr von bei der Montage auftretenden und somit die Entstehung von Störgeräuschen beeinflussenden Fehlern mit sich bringt.

Die DE 11 2006 002 343 T5 offenbart ein Verfahren und eine Vorrichtung, mit welchen der von einem Motor abgegebene bzw. der in einer Abgasanlage transportierte und nach außen abgegebene Schall beispielsweise durch die Beeinflussung der Ventilstellung eines im Abgasstrom des Motors angeordneten Auslassventils reguliert werden kann. Dabei wird im Betrieb des Motors stromabwärts des Auslassventils vermittels eines Mikrofons der Schallpegel des im Abgasstrom der Brennkraftmaschine transportierten Schalls erfasst und in ein Frequenzspektrum umgewandelt. Aus diesem Frequenzspektrum wird diejenige Frequenz herausgegriffen, bei welcher der Schallpegel maximal ist. Dieser maximale Schallpegel wird mit einem zugeordneten Referenzwert verglichen. Beruhend auf diesem Vergleich kann das Auslassventil angesteuert werden, um durch Veränderung von dessen Ventilstellung den Schallpegel auf einen vorbestimmten Schallpegel zu reduzieren.

Es ist die Aufgabe der vorliegenden Erfindung, ein Verfahren und eine Vorrichtung zur Analyse des akustischen Verhaltens eine Abgasklappe für eine Abgasanlage einer Brennkraftmaschine, insbesondere eines Fahrzeugs, vorzusehen, mit welchen in einfacher und zuverlässiger Weise Informationen über die akustische Qualität einer Abgasklappe bereitgestellt werden kann.

Gemäß einem ersten Aspekt der vorliegenden Erfindung wird diese Aufgabe gelöst durch ein Verfahren gemäß Anspruch 1 zur Analyse des akustischen Verhaltens einer Abgasklappe für eine Abgasanlage einer Brennkraftmaschine, wobei die Abgasklappe eine in einem Klappenkörper verstellbare Klappenblende umfasst.

Bei dem erfindungsgemäßen Aufbau wird eine zu analysierende Abgasklappe mit einem definiert vorgegebenen Messgeräusch, wie in dem erfindungsgemäßen Verfahren definiert, beaufschlagt. Dies bedeutet, dass die Abgasklappe grundsätzlich nicht in eine an eine Brennkraftmaschine angeschlossene Abgasanlage integriert sein muss, sondern davon losgelöst und nur beaufschlagt mit einem Messgeräusch analysiert werden kann. Dies stellt klare und reproduzierbare und somit auch untereinander vergleichbare Auswerteergebnisse bereit. Da weiterhin mit einem definiert vorgegebenen Referenz-Störgeräusch-Frequenzverlauf verglichen wird, ist auch die Referenzsituation klar vorgegeben, so dass die Aussagekraft der Aussageergebnisse weiter verbessert wird. Das wiederholte Montieren und Demontieren einer an eine Brennkraftmaschine angeschlossenen bzw. in ein Fahrzeug integrierten Abgasanlage entfällt bei der erfindungsgemäßen Vorgehensweise. Sie kann daher unmittelbar anschließend an den Fertigungsprozess oder integriert in den Entwicklungsprozess eingesetzt werden.

Für eine schnell durchzuführende und zu untereinander vergleichbaren Messergebnissen führende Ausgestaltung wird vorgeschlagen, dass die Maßnahme a) das Integrieren der Abgasklappe in eine Analysevorrichtung umfasst, wobei die Analysevorrichtung einen in einer Schallflussrichtung stromaufwärts des Klappenkörpers an diesen angrenzend zu positionierenden Schallzuleit-Kanalbereich und einen in einer Schallflussrichtung stromabwärts des Klappenkörpers an diesen angrenzend zu positionierenden Schallableit-Kanalbereich sowie eine Messgeräuschquelle zum Erzeugen des über den Schallzuleit-Kanalbereich zu der Abgasklappe zu leitenden Messgeräusches umfasst.

Das Messgeräusch, mit welchem eine zu analysierende Abgasklappe beaufschlagt wird, ist erfindungsgemäß ein Einzelton, der beispielsweise eine Frequenz kleiner/gleich 40 Hz, vorzugsweise im Bereich von 20 Hz bis 40 Hz, aufweist.

Der Störgeräusch-Frequenzverlauf kann bei der Maßnahme c) durch FourierAnalyse, vorzugsweise schnelle Fourier-Transformation, erzeugt werden.

Da sowohl der Störgeräusch-Frequenzverlauf, als auch der Referenz-Störgeräusch-Frequenzverlauf zumindest in einem bestimmten Frequenzbereich als näherungsweise durch eine Kurve wiedergegebene oder zumindest eingehüllte Verläufe betrachtet werden können, wird bei der Maßnahme e) die Qualität der Abgasklappe als einer Soll-Qualität entsprechend beurteilt, wenn der Störgeräusch-Frequenzverlauf in wenigstens einem vorbestimmten Frequenzbereich unter dem Referenz-Störgeräusch-Frequenzverlauf liegt. Dies bedeutet, dass in dem betrachteten Frequenzbereich für alle dort repräsentierten Frequenzanteile im Störgeräusch-Frequenzverlauf die Amplitude kleiner ist, als im Referenz-Störgeräusch-Frequenzverlauf.

Um eine zuverlässige Basis für den Vergleich des Störgeräusch-Frequenzverlaufs mit dem Referenz-Störgeräusch-Frequenzverlauf bereitstellen zu können, wird vorgeschlagen, dass der Referenz-Störgeräusch-Frequenzverlauf auf der Grundlage von in Zuordnung zu einer Vielzahl von Abgasklappen erzeugten Störgeräusch-Frequenzverläufen ermittelt wird, oder/und dass der bei der Maßnahme d) mit dem Störgeräusch-Frequenzverlauf verglichene Referenz-Störgeräusch-Frequenzverlauf in Zuordnung zu einem bei der Maßnahme a) erzeugten Messgeräusch ausgewählt wird.

Gemäß einem weiteren Aspekt wird die eingangs angegebene Aufgabe gelöst durch eine Vorrichtung gemäß Anspruch 6 zur Analyse des akustischen Verhaltens einer Abgasklappe für eine Abgasanlage einer Brennkraftmaschine mit einem erfindungsgemäßen Verfahren, wobei die Abgasklappe eine in einem Klappenkörper verstellbare Klappenblende umfasst, die Vorrichtung umfassend:
- einen in einer Schallflussrichtung stromaufwärts des Klappenkörpers an diesen angrenzend zu positionierenden Schallzuleit-Kanalbereich,
- einen in einer Schallflussrichtung stromabwärts des Klappenkörpers an diesen angrenzend zu positionierenden oder/und durch diesen bereitgestellten Schallableit-Kanalbereich,
- wenigstens eine Messgeräuschquelle zum Erzeugen eines über den Schallzuleit-Kanalbereich zu der Abgasklappe zu leitenden Messgeräusches,
- wenigstens einen Geräuschsensor zur Erfassung von entlang des Schallableit-Kanalbereichs geleiteten Störgeräuschen,
- eine Ansteueranordnung zur Ansteuerung der wenigstens einen Messgeräuschquelle zur Erzeugung eines Einzeltons als Messgeräusch,
- eine Auswerteanordnung zum Empfang eines einen Störgeräusch-Zeitverlauf repräsentierenden Ausgangssignals des wenigstens einen Geräuschsensors, wobei die Auswerteanordnung dazu ausgebildet ist, beruhend auf dem Störgeräusch-Zeitverlauf, einen Störgeräusch-Frequenzverlauf zu erzeugen und den Störgeräusch-Frequenzverlauf in wenigstens einem vorbestimmtem Frequenzbereich mit einem Referenz-Störgeräusch-Frequenzverlauf zu vergleichen.

Um mit einer derartigen Vorrichtung verschiedene Analysesituationen vorgeben zu können, insbesondere auch die in verschiedenen Abgasanlagen zu integrierenden Abgasanlagen untersuchen bzw. analysieren zu können, wird weiter vorgeschlagen, die Ansteueranordnung dazu ausgebildet ist, die wenigstens eine Messgeräuschquelle zur Erzeugung unterschiedlicher Messgeräusche anzusteuern.

Die Grundlage der vorliegenden Erfindung wird nachfolgend mit Bezug auf die beiliegenden Figuren detailliert beschrieben. Es zeigt:
- Fig. 1: eine in einer Abgasanlage einer Brennkraftmaschine eines Fahrzeugs einsetzbare Abgasklappe;
- Fig. 2: in prinzipartiger Darstellung eine Vorrichtung zur Analyse des akustischen Verhaltens einer Abgasklappe und deren Arbeitsweise;
- Fig. 3: ein prinzipartiges Diagramm eines Störgeräusch-Frequenzverlaufs und eines zugeordneten Referenz-Störgeräusch-Frequenzverlaufs.

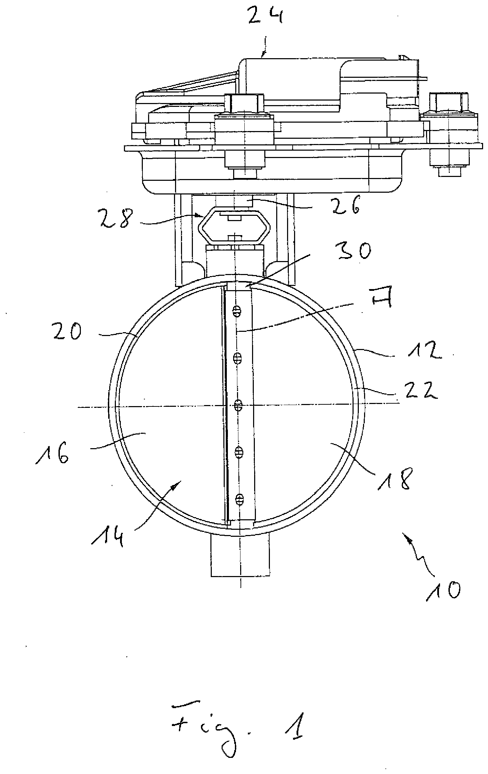

In Fig. 1 ist eine in einer Abgasanlage einer Brennkraftmaschine in einem Fahrzeug einsetzbare Abgasklappe allgemein mit 10 bezeichnet. Die Abgasklappe 10 umfasst einen rohrartigen Klappenkörper 12, in welchem eine Klappenblende 14 mit zwei Klappenflügeln 16, 18 um eine Schwenkachse A schwenkbar getragen ist. In Zuordnung zu den beiden Klappenflügeln 16, 18 sind am Klappenkörper 18 festgelegte Anschläge 20, 22 vorgesehen, an welchen in der in Fig. 1 dargestellten Schließstellung die Klappenflügel 16, 18 zur Anlage kommen. Bei Verschwenkung um die Schwenkachse A um näherungsweise 90° befindet die Klappenblende 20 sich in ihrer Offen-Stellung.

Zum Verschwenken der Klappenblende 14 um die Schwenkachse A ist ein allgemein mit 24 bezeichneter elektromotorischer Schwenkantrieb vorgesehen. Eine Antriebswelle 26 des Schwenkantriebs 24 ist über ein Kopplungselement 28 an eine die beiden Klappenflügel 16, 18 tragende Schwenkwelle 30 der Klappenblende 16 angekoppelt.

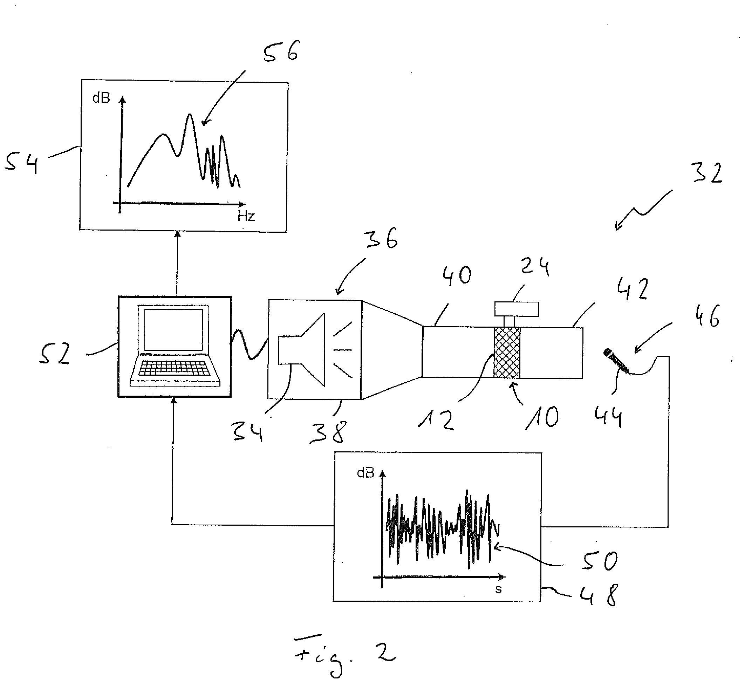

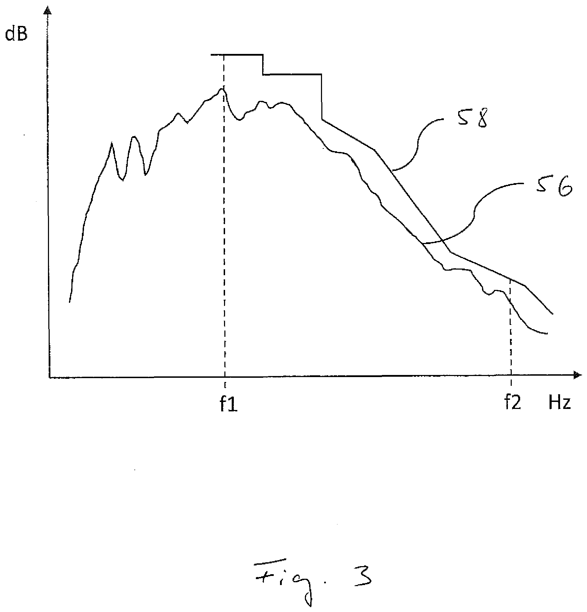

Nachfolgend wird mit Bezug auf die Fig. 2 und 3 detailliert erläutert, wie eine derartige Abgasklappe 10 hinsichtlich ihres akustischen Verhaltens analysiert werden kann. Für dieses akustische Verhalten ist insbesondere von Bedeutung, dass auch bei der in Fig. 1 dargestellten Schließstellung der Klappenblende 14 unvermeidbare Leckageströme zwischen dem Außenumfang der Klappenflügel 16, 18 und dem Innenumfang des Klappenkörpers 12 auftreten, insbesondere in denjenigen Bereichen, in welchen die Klappenflügel 16, 18 in ihrem Außenumfangsbereich an die Schwenkwelle 30 anschließen. Dies führt aufgrund des intermittierenden Abgasausstoßes einer Brennkraftmaschine und somit dem pulsierend auf die Klappenblende 14 auftreffenden Abgas zu Störgeräuschen, die im Inneren eines Fahrzeugs und insbesondere auch im Außenbereich eines Fahrzeugs deutlich wahrgenommen werden können. Mit der nachfolgend beschriebenen Vorrichtung bzw. Vorgehensweise soll eine reproduzierbare und vergleichbare Analyse der akustischen Charakteristik einer derartigen Abgasklappe 10 ermöglicht werden.

Die Fig. 2 zeigt in prinzipieller Darstellung eine Vorrichtung 32, mit welcher das akustische Verhalten einer Abgasklappe 10 analysiert werden kann. Die Vorrichtung 32 umfasst als wesentlichen Bestandteil eine beispielsweise als Lautsprecher 34 ausgebildete Messgeräuschquelle 36. Diese ist in einem Gehäuse 38 angeordnet, welches zu einem beispielsweise rohrartig ausgebildeten Schallzuleit-Kanalbereich 40 offen ist. In einer Schallflussrichtung auf den Schallzuleitbereich 40 folgend ist ein beispielsweise ebenfalls rohrartig ausgebildeter Schallableit-Kanalbereich 42 angeordnet. Zwischen dem Schallzuleit-Kanalbereich 40 und dem Schallableit-Kanalbereich 42 wird die Abgasklappe 10 eingesetzt. Hierfür können der Schallzuleit-Kanalbereich 40 und der Schallableit-Kanalbereich 46 einen gegenseitigen Abstand aufweisen, welcher der Länge des Klappenkörpers 12 entspricht, so dass der Klappenkörper 12 im Wesentlichen ohne Spiel zwischen dem Schallzuleit-Kanalbereich 40 und dem Schallableit-Kanalbereich 42 angeordnet werden kann. Um eine insbesondere auch akustisch dichte Anordnung zu schaffen, können im Angrenzungsbereich des Klappenkörpers 12 an den Schallzuleit-Kanalbereich 40 und den Schallableit-Kanalbereich 42 elastische Dichtelemente eingesetzt werden. Ferner können Positioniermittel vorgesehen sein, mit welchen beispielsweise durch Spannelemente oder dergleichen die Abgasklappe 10 zwischen dem Schallzuleit-Kanalbereich 40 und dem Schallableit-Kanalbereich 42 gehalten wird.

An einem von der Abgasklappe 10 entfernten offenen Ende des Schallableit-Kanalbereichs 42 ist ein beispielsweise in Form eines Mikrofons 44 ausgebildeter Geräuschsensor 46 vorgesehen. Der Geräuschsensor 46 erfasst den aus dem Schallableit-Kanalbereich 42 austretenden Schall und erzeugt einen in Fig. 2 anhand eines Diagramms 48 veranschaulichten Störgeräusch-Zeitverlauf 50. Dieser kann beispielsweise den über der Zeit aufgetragenen bzw. auftretenden Schallpegel repräsentieren. Bei rohrartiger Ausgestaltung des Klappenkörpers 12 kann der Schallableit-Kanalbereich alternativ durch den in der Schallflussrichtung stromabwärts der Klappenblende 14 liegenden Teil des Klappenkörpers 12 bereitgestellt sein, so dass das Mikrofon 44 beispielsweise unmittelbar anschließend an den und somit näher an dem Kappenkörper 12 positioniert werden kann. In diesem Sinne bildet also der Klappenkörper 12 mit seinem stromabwärts der Klappenblende 14 liegenden Teil selbst einen Teil der Vorrichtung 32

Das vom Geräuschsensor 46 ausgegebene Signal, also der Störgeräusch-Zeitverlauf, wird in eine Ansteuer/Auswerte-Anordnung 52 eingegeben. Die Ansteuer/AuswerteAnordnung 52 ist dazu ausgebildet, das Signal von dem Geräuschsensor 46 zu empfangen und dieses in nachfolgend beschriebener Art und Weise zu bearbeiten. Ferner ist die Ansteuer/Auswerte-Anordnung 52 dazu ausgebildet, die Geräuschquelle 36 derart anzusteuern, dass diese einen Einzelton als definiertes Geräusch abgibt. Zu diesem Zwecke kann die Ansteuer/Auswerte-Anordnung 52 mit einem programmierbaren Mikroprozessor und Speichermitteln ausgebildet sein, also beispielsweise als Computersystem ausgebildet sein, welches einerseits einer Bedienperson die Möglichkeit gibt, Daten einzugeben, und andererseits das Auswerteergebnis visuell anzeigen oder in Dateiform bereitstellen kann.

Zur Durchführung einer akustischen Analyse einer zu untersuchenden Abgasklappe 10 wird, nachdem die Abgasklappe 10 zwischen dem Schallzuleit-Kanalbereich 40 und den Schallableit-Kanalbereich 42 positioniert wurde, die Geräuschquelle 36 durch die Ansteuer/Auswerte-Anordnung 52 zur Erzeugung eines definierten Geräusches angesteuert. Dieses Geräusch kann beispielsweise in Abhängigkeit von der zu analysierenden Abgasklappe 10 oder/und in Abhängigkeit von einem zu simulierenden Betriebszustand der Abgasklappe 10 oder/und in Abhängigkeit von einem zu simulierenden System Brennkraftmaschine-Abgasanlage ausgewählt werden und kann beispielsweise ein tieffrequenter Einzelton mit einer Frequenz im Bereich von etwa 30 Hz bis 40 Hz sein. Zur Analyse wird die Abgasklappe 10 in einen definierten Betriebszustand gebracht, beispielsweise einen Betriebszustand, in welchem die Klappenflügel 16, 18 der Klappenblende 14 an den jeweils zugeordneten Anschlägen 20, 22 anliegen. Durch das von der Geräuschquelle 36 generierte tieffrequente Geräusch wird die Luftsäule stromaufwärts der Abgasklappe 10, also insbesondere im Schallzuleit-Kanalbereich 40, in Schwingung versetzt, wodurch die im Verbrennungsbetrieb einer Brennkraftmaschine erzeugte pulsierende Beaufschlagung der Abgasklappe 10 simuliert wird. Aufgrund dieser Anregung strömt Luft durch die zwischen der Klappenblende 14 und dem Klappenkörper 12 vorhandenen Zwischenräume und erzeugt dabei Strömungsgeräusche, welche allgemein als Störgeräusche zu betrachten sind. Diese Strömungsgeräusche bzw. Störgeräusche werden durch den Geräuschsensor 46, also das Mikrofon 44, aufgenommen und in Form des Störgeräusch-Zeitverlauf 50 als Erfassungssignal zur Ansteuer/Auswerte-Anordnung 52 geleitet.

In der Ansteuer/Auswerte-Anordnung 52 findet eine Auswertung des Störgeräusch-Zeitverlaufs 50 statt. Hierzu wird zunächst der Störgeräusch-Zeitverlauf 50 beispielsweise durch schnelle Fourier-Transformation in einen im Diagramm 54 veranschaulichten Störgeräusch-Frequenzverlauf 56 transformiert.

Ein derartiger Störgeräusch-Frequenzverlauf 56 ist auch in Fig. 3 dargestellt. Dieser repräsentiert ein Frequenzspektrum, in welchem anhand der in Zuordnung zu jedem darin enthaltenen Frequenzwert eine Amplitude die Stärke des Frequenzanteils in dem als Störgeräusch auftretenden weißen, also im Frequenzspektrum breitbandigen Rauschen repräsentiert. Der Störgeräusch-Frequenzverlauf 56 kann als im Wesentlichen kontinuierliche oder quasi-kontinuierliche Kurve wiedergegeben sein, kann jedoch auch durch eine Vielzahl diskreter Frequenzwerte mit jeweils zugeordneten Amplituden repräsentiert sein.

In Zuordnung zu dem Störgeräusch-Frequenzverlauf 56 ist in der Ansteuer/Auswerte-Anordnung 52 ein Referenz-Störgeräusch-Frequenzverlauf 58 hinterlegt. Der Referenz-Störgeräusch-Frequenzverlauf kann beispielsweise auf einem Mittelwert basieren, der aus Störgeräusch-Frequenzverläufen mehrerer anderer Abgasklappen generiert wird, deren Störgeräusche grundsätzlich als akzeptierbar beurteilt wurden. Somit definiert der Referenz-Störgeräusch-Frequenzverlauf für den zu untersuchenden Frequenzbereich, der beispielsweise im Diagramm der Fig. 3 zwischen den Frequenzen f1 und f2 liegen kann und ein Frequenzspektrum von z.B. 20 HZ bis 20.000 Hz umfassen kann, eine Obergrenze für die Amplitude der in diesem Frequenzbereich liegenden Frequenzanteile. Der angegebene Frequenzbereich ist dabei insbesondere an die durch das menschliche Gehör wahrnehmbaren Frequenzen angepasst. Frequenzen außerhalb dieses durch das menschliche Gehör wahrnehmbaren Bereichs sind allgemein unkritisch.

Man erkennt in Fig. 3, dass der dort nur beispielhaft dargestellte Störgeräusch-Frequenzverlauf 56 im gesamten untersuchten Frequenzbereich f1 bis f2 unter dem Referenz-Störgeräusch-Frequenzverlauf 58 liegt. Dies bedeutet, dass bei jeder im untersuchten Frequenzbereich f1 bis f2 vorhandenen Frequenz die zugeordnete Amplitude des Störgeräusch-Frequenzverlaufs 56 unter der entsprechenden Amplitude des Referenz-Störgeräusch-Frequenzverlaufs liegt. Die zugeordnete Abgasklappe 10 wird in diesem Falle als einer Soll-Qualität entsprechend beurteilt werden. Würde der Störgeräusch-Frequenzverlauf 56 bereichsweise über dem Referenz-Störgeräusch-Frequenzverlauf 56 liegen, so könnte beispielsweise beurteilt werden, dass die analysierte Abgasklappe den vorgegebenen Qualitätskriterien nicht entspricht.

Die vorangehend beschriebene Analyse kann für verschiedene Betriebsstellungen einer jeweiligen Abgasklappe 10 vorgenommen werden und unter Verwendung verschiedener Messgeräusche durchgeführt werden. Es können somit verschiedene Betriebssituationen nachgestellt werden, um zu analysieren, in welchen Betriebssituationen eine untersuchte Abgasklappe 10 sich den vorgegebenen Anforderungen entsprechend verhält oder nicht akzeptierbare Abweichungen zeigt.

Mit der vorangehend beschriebenen Art und Weise kann automatisiert und in sehr kurzer Zeit das akustische Verhalten einer Abgasklappe analysiert werden und somit entschieden werden, ob eine Abgasklappe den vorgegebenen Qualitätsanforderungen entspricht und im weiteren Fertigungsprozess verwendet werden kann, oder nicht. Eine derartige Analyse kann beispielsweise am Ende der Fertigungslinie für Abgasklappen vorgesehen sein, kann jedoch auch nach der Integration der Abgasklappen in eine jeweilige Abgasanlage erfolgen. Die Analyse kann bei minimalem Personalaufwand durchgeführt werden und bietet die Möglichkeit, aufgrund der Verwendung definierter Messgeräusche und definierter Referenz-Störgeräusch-Frequenzverläufe die Möglichkeit, Analyseergebnisse reproduzierbar und miteinander gut vergleichbar bereitzustellen. Es können auf diese Art und Weise bei einer Messzeitdauer von weniger als 10 Sekunden pro Abgasklappe mehrere hundert Abgasklappen in jeder Arbeitsschicht analysiert werden. Dabei ist es leicht möglich, bei der Analyse zwischen Abgasklappen verschiedener Bauart zu wechseln, da hierzu beispielsweise nur ein anderes Messgeräusch und ein anderer Referenz-Störgeräusch-Frequenzverlauf in Zuordnung zu einer jeweils analysierten Abgasklappe ausgewählt werden müssen.

## Patentansprüche

1. Verfahren zur Analyse des akustischen Verhaltens einer Abgasklappe (10) für eine Abgasanlage einer Brennkraftmaschine, wobei die Abgasklappe (10) eine in einem Klappenkörper (12) verstellbare Klappenblende (14) umfasst, wobei das Verfahren die folgenden Maßnahmen umfasst:
a) Beaufschlagen der Abgasklappe (10) mit einem Messgeräusch,
b) Erfassen von an der Abgasklappe (10) entstehenden Störgeräuschen und Erzeugen eines Störgeräusch-Zeitverlaufs (50),
c) beruhend auf dem Störgeräusch-Zeitverlauf (50), Erzeugen eines Störgeräusch-Frequenzverlaufs (56),
d) Vergleichen des Störgeräusch-Frequenzverlaufs (56) mit einem Referenz-Störgeräusch-Frequenzverlauf (58),
e) beruhend auf dem bei der Maßnahme d) durchgeführten Vergleich, Beurteilen der akustischen Qualität der Abgasklappe (10),
wobei bei der Maßnahme a) das Messgeräusch ein Einzelton ist, und wobei bei der Maßnahme e) die Qualität der Abgasklappe (10) als einer Soll-Qualität entsprechend beurteilt wird, wenn der Störgeräusch-Frequenzverlauf (56) in wenigstens einem vorbestimmtem Frequenzbereich (f1-f2) unter dem Referenz-Störgeräusch-Frequenzverlauf (58) liegt.

2. Verfahren nach Anspruch 1, **dadurch gekennzeichnet, dass** die Maßnahme a) das Integrieren der Abgasklappe (10) in eine Analysevorrichtung (32) umfasst, wobei die Analysevorrichtung (32) einen in einer Schallflussrichtung stromaufwärts des Klappenkörpers (12) an diesen angrenzend zu positionierenden Schallzuleit-Kanalbereich (40) und einen in einer Schallflussrichtung stromabwärts des Klappenkörpers (12) an diesen angrenzend zu positionierenden Schallableit-Kanalbereich (42) sowie eine Messgeräuschquelle (36) zum Erzeugen des über den Schallzuleit-Kanalbereich (40) zu der Abgasklappe (10) zu leitenden Messgeräusches umfasst.

3. Verfahren nach Anspruch 1 oder 2, **dadurch gekennzeichnet, dass** das Messgeräusch eine Frequenz kleiner/gleich 40 Hz, vorzugsweise im Bereich von 20 Hz bis 40 Hz, aufweist.

4. Verfahren nach einem der vorangehenden Ansprüche, **dadurch gekennzeichnet, dass** bei der Maßnahme c) der Störgeräusch-Frequenzverlauf (56) durch Fourieranalyse, vorzugsweise schnelle Fouriertransformation, erzeugt wird.

5. Verfahren nach einem der vorangehenden Ansprüche, **dadurch gekennzeichnet, dass** der Referenz-Störgeräusch-Frequenzverlauf (58) auf der Grundlage von in Zuordnung zu einer Vielzahl von Abgasklappen (10) erzeugten Störgeräusch-Frequenzverläufen (50) ermittelt wird, oder/und dass der bei der Maßnahme d) mit dem Störgeräusch-Frequenzverlauf (50) verglichene Referenz-Störgeräusch-Frequenzverlauf (58) in Zuordnung zu einem bei der Maßnahme a) erzeugten Messgeräusch ausgewählt wird.

6. Vorrichtung zur Analyse des akustischen Verhaltens einer Abgasklappe für eine Abgasanlage einer Brennkraftmaschine mit einem Verfahren nach einem der vorangehenden Ansprüche, wobei die Abgasklappe (10) eine in einem Klappenkörper (12) verstellbare Klappenblende (14) umfasst, die Vorrichtung umfassend:
- einen in einer Schallflussrichtung stromaufwärts des Klappenkörpers (12) an diesen angrenzend zu positionierenden Schallzuleit-Kanalbereich (40),
- einen in einer Schallflussrichtung stromabwärts des Klappenkörpers (12) an diesen angrenzend zu positionierenden oder/und durch diesen bereitgestellten Schallableit-Kanalbereich (42),
- wenigstens eine Messgeräuschquelle (36) zum Erzeugen eines über den Schallzuleit-Kanalbereich (40) zu der Abgasklappe (10) zu leitenden Messgeräusches,
- wenigstens einen Geräuschsensor (46) zur Erfassung von entlang des Schallableit-Kanalbereichs (42) geleiteten Störgeräuschen,
- eine Ansteueranordnung (52) zur Ansteuerung der wenigstens einen Messgeräuschquelle (36) zur Erzeugung eines Einzeltons als Messgeräusch,
- eine Auswerteanordnung (52) zum Empfang eines einen Störgeräusch-Zeitverlauf (50) repräsentierenden Ausgangssignals des wenigstens einen Geräuschsensors (46), wobei die Auswerteanordnung (52) dazu ausgebildet ist, beruhend auf dem Störgeräusch-Zeitverlauf (50), einen Störgeräusch-Frequenzverlauf (56) zu erzeugen und den Störgeräusch-Frequenzverlauf (56) in wenigstens einem vorbestimmtem Frequenzbereich mit einem Referenz-Störgeräusch-Frequenzverlauf (58) zu vergleichen.

7. Vorrichtung nach Anspruch 6, **dadurch gekennzeichnet, dass** die Ansteueranordnung (52) dazu ausgebildet ist, die wenigstens eine Messgeräuschquelle (36) zur Erzeugung unterschiedlicher Messgeräusche anzusteuern.

## Claims

1. Process for the analysis of the acoustic characteristic of an exhaust gas flap (10) for an exhaust system of an internal combustion engine, wherein the exhaust gas flap (10) comprises a flap diaphragm (14), which is adjustable in a flap body (12), wherein the process comprises the following steps:
a) application of a measurement noise to the exhaust gas flap (10),
b) detection of disturbing noises originating at the exhaust gas flap (10) and generation of a disturbing noise time course (50),
c) generation of a disturbing noise frequency course (56) based on the disturbing noise time course (50),
d) comparison of the disturbing noise frequency course (56) with a reference disturbing noise frequency course (58),
e) evaluation of the acoustic quality of the exhaust gas flap (10) based on the comparison carried out in step d),
wherein in step a) the measured noise is a single tone, and wherein the quality of the exhaust gas flap (10) is evaluated in step e) as corresponding to a desired quality, when the disturbing noise frequency course (56) is below the reference disturbing noise frequency course (58) in at least one predetermined frequency range (f1-f2).

2. Process in accordance with claim 1, **characterized in that** step a) comprises the integration of the exhaust gas flap (10) into an analysis device (32), the analysis device (32) comprising a sound feed duct area (40) to be positioned in a sound flow direction upstream of the flap body (12) adjoining the latter and a sound removal duct area (42) to be positioned in a sound flow direction downstream of the flap body (12) adjoining the latter, as well as a measurement noise source (36) for generating the measurement noise to be sent via the sound feed duct area (40) to the exhaust gas flap (10).

3. Process in accordance with claim 1 or 2, **characterized in that** the measurement noise has a frequency less than/equal to 40 Hz, preferably in the range of 20 Hz to 40 Hz.

4. Process in accordance with one of the above claims, **characterized in that** the disturbing noise frequency course (56) is generated in step c) by means of Fourier analysis, preferably fast Fourier transformation.

5. Process in accordance with one of the above claims, **characterized in that** the reference disturbing noise frequency course (58) is determined on the basis of disturbing noise frequency courses (50) generated in association with a plurality of exhaust gas flaps (10), or/and that the reference disturbing noise frequency course (58) compared with the disturbing noise frequency course (50) in step d) is selected in association with a measurement noise generated in step a).

6. Device for the analysis of the acoustic characteristic of an exhaust gas flap for an exhaust system of an internal combustion engine, with a process in accordance with one of the above claims, wherein the exhaust gas flap (10) comprises a flap diaphragm (14), which is adjustable in a flap body (12), the device comprising:
- a sound feed duct area (40) to be positioned in a sound flow direction upstream of the flap body (12) adjoining this flap body,
- a sound removal duct area (42) to be positioned in a sound flow direction downstream of the flap body (12) adjoining the flap body or/and provided by this flap body,
- at least one measurement noise source (36) for the generation of a measurement noise to be sent via the sound feed duct area (40) to the exhaust gas flap (10),
- at least one noise sensor (46) for the detection of disturbing noises sent along the sound removal duct area (42),
- an actuating unit (52) for the actuation of the at least one measurement noise source (36) for the generation of a single tone as measurement noise,
- an analysis device (52) for receiving an output signal of the at least one noise sensor (46), which output signal represents a disturbing noise time course (50), wherein the analysis device (52) is configured to generate a disturbing noise frequency course (56) based on the disturbing noise time course (50) and to compare the disturbing noise frequency course (56) in at least one predetermined frequency range with a reference disturbing noise frequency course (58).

7. Device in accordance with claim 6, **characterized in that** the actuating unit (52) is configured to actuate the at least one measurement noise source (36) for the generation of different measurement noises.

## Revendications

1. Procédé pour l'analyse de la caractéristique acoustique d'un clapet de gaz d'échappement (10) pour un système d'échappement d'un moteur à combustion interne, le clapet de gaz d'échappement (10) comprenant une membrane de clapet (14), qui est réglable dans un corps de clapet (12), le procédé comprenant les étapes suivantes :
a) application d'un bruit de mesure sur le clapet de gaz d'échappement (10),
b) détection de bruits perturbateurs provenant du clapet de gaz d'échappement (10) et génération d'une courbe temporelle de bruit perturbateur (50),
c) génération d'une courbe de fréquence de bruit perturbateur (56) basée sur la courbe temporelle de bruit perturbateur (50),
d) comparaison de la courbe de fréquence de bruit perturbateur (56) avec une courbe de fréquence de bruit perturbateur de référence (58),
e) évaluation de la qualité acoustique du clapet de gaz d'échappement (10) sur la base de la comparaison effectuée à l'étape d).
dans laquelle, à l'étape a), le bruit mesuré est un son unique, et dans laquelle à l'étape e) la qualité du clapet de gaz d'échappement (10) est évaluée correspondant à la qualité souhaitée, lorsque la courbe de fréquence de bruit perturbateur (56) est inférieure à la courbe de fréquence de bruit perturbateur de référence (58) dans au moins une plage de fréquence prédéterminée (f1-f2).

2. Procédé selon la revendication 1, **caractérisé en ce que** l'étape a) comprend l'intégration du clapet de gaz d'échappement (10) dans un dispositif d'analyse (32), le dispositif d'analyse (32) comprenant une zone de conduit d'alimentation en son (40) à positionner dans une direction d'écoulement du son en amont du corps de clapet (12) adjacent à ce corps de clapet et une zone de conduit d'évacuation du son (42) à positionner dans une direction d'écoulement du son en aval du corps de clapet (12) adjacent à ce corps de clapet, ainsi qu'une source de bruit de mesure (36) pour générer le bruit de mesure à envoyer par la zone de conduit d'alimentation du son (40) au clapet de gaz d'échappement (10).

3. Procédé selon la revendication 1 ou 2, **caractérisé en ce que** le bruit de mesure a une fréquence inférieure/égale à 40 Hz, de préférence dans la plage de 20 Hz à 40 Hz.

4. Procédé selon l'une des revendications précédentes, **caractérisé en ce que** la courbe de fréquence de bruit perturbateur (56) est généré à l'étape c) au moyen d'une analyse de Fourier, de préférence une transformation de Fourier rapide.

5. Procédé selon l'une des revendications précédentes, **caractérisé en ce que** la courbe de fréquence de bruit perturbateur de référence (58) est déterminée sur la base de courbes de fréquence de bruit perturbateur (50) générées en association avec une pluralité de clapets de gaz d'échappement (10), et/ou **en ce que** la courbe de fréquence de bruit perturbateur de référence (58) comparée à la courbe de fréquence de bruit perturbateur (50) à l'étape d) est sélectionnée en association avec un bruit de mesure généré à l'étape a).

6. Dispositif pour l'analyse de la caractéristique acoustique d'un clapet de gaz d'échappement pour un système d'échappement d'un moteur à combustion interne, avec un procédé selon l'une des revendications précédentes, dans lequel le clapet de gaz d'échappement (10) comprend une membrane de clapet (14), qui est réglable dans un corps de clapet (12), le dispositif comprenant :
- une zone de conduit d'alimentation du son (40) à positionner dans une direction d'écoulement du son en amont du corps de clapet (12) adjacent à ce corps de clapet,
- une zone de conduit d'évacuation du son (42) à positionner dans une direction d'écoulement du son en aval du corps de clapet (12) adjacent à ce corps de clapet et/ou fourni par ce corps de clapet,
- au moins une source de bruit de mesure (36) pour la génération d'un bruit de mesure à envoyer via la zone de conduit d'alimentation du son (40) au clapet de gaz d'échappement (10),
- au moins un capteur de bruit (46) pour la détection des bruits perturbateurs envoyés le long de la zone de conduit d'évacuation du son (42),
- une unité d'actionnement (52) pour l'activation d'au moins une source de bruit de mesure (36) pour la génération d'un son unique comme bruit de mesure,
- un dispositif d'analyse (52) pour la réception d'un signal de sortie du au moins un capteur de bruit (46), lequel signal de sortie représente une courbe temporelle de bruit perturbateur (50), dans lequel le dispositif d'analyse (52) est configuré pour générer une courbe de fréquence de bruit perturbateur (56) sur la base de la courbe temporelle de bruit perturbateur (50) et pour comparer la courbe de fréquence de bruit perturbateur (56) dans au moins une plage de fréquence prédéterminée avec une courbe de fréquence de bruit perturbateur de référence (58).

7. Dispositif selon la revendication 6, **caractérisé en ce que** l'unité d'actionnement (52) est configurée pour actionner ladite au moins une source de bruit de mesure (36) pour la génération de différents bruits de mesure.
